# EUROPÄISCHE PATENTSCHRIFT

(11) **EP 0 931 951 B1**
(45) Veröffentlichungstag und Bekanntmachung des Hinweises auf die Patenterteilung: **13.09.2000**
(21) Anmeldenummer: 98100679.4
(22) Anmeldetag: 16.01.1998
(51) Int. Cl.: F16D 21/06, F16D 25/10

(54) **Doppelkupplung in Reibscheibenbauart, insbesondere für Kraftfahrzeuge**
Double friction disc clutch, especially for motor vehicles
Embrayage double à plateaux de friction, en particulier pour véhicules automobiles

(43) Veröffentlichungstag der Anmeldung: 28.07.1999
(73) Patentinhaber: Ford Global Technologies, Inc., Dearborn, Michigan 48126 (US)
(72) Erfinder: Hegerath, Andreas, 50126 Bergheim (DE); Bungart, Stephan, 42281 Wuppertal (DE); Eggert, Ulrich, 41751 Viersen (DE)
(74) Vertreter: Messulam, Alec Moses

(56) Entgegenhaltungen:
- EP-A- 0 185 176
- EP-A- 0 247 770
- DE-A- 2 931 514
- DE-A- 3 907 030
- FR-A- 2 539 683
- US-A- 3 185 274
- "4. 2 servo motor operated double clutch system" INGENIEUR DE L'AUTOMOBILE, Juni 1987, Seiten 116-117, XP002066993

## Beschreibung

Die Erfindung bezieht sich auf eine Doppelkupplung in Reibscheibenbauart, insbesondere für Kraftfahrzeuge, der im Oberbegriff des Patentanspruchs 1 erläuterten Art.

Aus der DE 28 30 659 A1 ist eine Doppelkupplung in Reibscheibenbauart, insbesondere für Kraftfahrzeuge, der im Oberbegriff des Patentanspruchs 1 erläuterten Art bekannt.

Bei der bekannten Doppelkupplung in Reibscheibenbauart sind die Tellerfedern und die durch diese belasteten Anpreßplatten spiegelbildlich zueinander angeordnet, so daß die Tellerfedern im Inneren der Doppelkupplung angeordnet sind und die getrennt betätigbaren Ausrückeinrichtungen nur jeweils über durch entsprechende Öffnungen in den festen Druckplatten hindurchgreifende Bolzenanordnungen an den Anpreßplatten angreifen, um den Reibungseingriff mit einer der beiden Kupplungsreibscheiben aufzuheben.

Die entsprechenden Ausrückeinrichtungen sind dementsprechend mechanisch verhältnismäßig aufwendig und in ihrer Bauart relativ schwer.

Aus der US 3 185 274 A ist eine Doppelkupplung in Reibscheibenbauart, insbesondere für Kraftfahrzeuge, der im Oberbegriff des Patentanspruches 1 erläuterten Art bekannt, bei der die auf die erste Anpreßplatte einwirkende Tellerfeder mit ihrer Neutrallinie in einer ringförmigen Schneiden/Haltering-Lagerung kippbar an der zweiten Druckplatte abgestützt ist und die auf die zweite Anpreßplatte einwirkende zweite Tellerfeder mit ihrem Außenumfang an der zweiten Anpreßplatte anliegt und mit ihrer Neutrallinie in einer ringförmigen Schneiden/Haltering-Lagerung kippbar an einem fest mit den Druckplatten verbundenen Kupplungskorb abgestützt ist und an ihren an ihrem Innenumfang ausgebildeten Betätigungszungen über eine zweite Ausrücklageranordnung betätigbar ist.

Bei dieser bekannten Ausführungsform sind die Schneiden/Haltering-Lagerungen für beide Tellerfedern an einem mit der zweiten Druckplatte verbundenen Kupplungskorb einander unmittelbar benachbart angeordnet, wodurch dieser einer erheblichen Beanspruchung ausgesetzt ist und verstärkt ausgebildet werden muß.

Die Aufgabe der Erfindung ist es, eine Doppelkupplung in Reibscheibenbauart, insbesondere für Kraftfahrzeuge, der im Oberbegriff des Patenanspruchs 1 erläuterten Art derart zu verbessern, daß durch eine spezielle Anordnung der die Anpreßplatten belastenden Tellerfedern die erforderlichen Ausrückeinrichtungen wesentlich einfacher und leichter konstruiert werden können.

Gemäß der Erfindung wird diese Aufgabe gelöst, indem bei einer Doppelkupplung in Reibscheibenbauart, insbesondere für Kraftfahrzeuge, der im Oberbegriff des Patentanspruchs 1 erläuterten Art, die im Kennzeichenteil des Patentanspruchs 1 aufgezeigten Merkmale angewendet werden.

Dadurch, daß die auf die erste Anpreßplatte einwirkende Tellerfeder mit ihrem Innenumfang an der ersten Anpreßplatte anliegt, mit ihrer Neutrallinie in einer an sich bekannten ringförmigen Schneiden/Haltering-Lagerung kippbar an der zweiten Druckplatte abgestützt ist und an ihrem Außenumfang mit Betätigungszungen ausgebildet ist, die über Stege eines Korbteiles beaufschlagbar sind, der über eine erste Ausrücklageranordnung betätigbar ist und die auf die zweite Anpreßplatte einwirkende Tellerfeder mit ihrem Außenumfang an der zweiten Anpreßplatte anliegt, mit ihrer Neutrallinie in einer ringförmigen Schneiden/Haltering-Lagerung an einem fest mit den festen Druckplatten verbundenen Korbteil kippbar abgestützt ist und an ihrem Innenumfang ausgebildeten Betätigungszungen über eine zweite Ausrücklageranordnung betätigbar ist, wird eine Doppelkupplung in Reibscheibenbauart geschaffen, deren baulicher Aufwand sowohl von der axialen Erstreckung als auch vom Baugewicht her wesentlich geringer gehalten werden kann als die bisher bekannten Ausführungen.

In den weiteren Patentansprüchen sind zweckmäßige Ausgestaltungen der Erfindung erläutert.

In den Zeichnungen sind zwei Ausführungsbeispiele der erfindungsgemäßen Doppelkupplung erläutert. Es zeigt:
- Fig. 1: einen vertikalen Schnitt durch eine erste Ausführungsform einer erfindungsgemäßen Doppelkupplung in Reibscheibenbauart;
- Fig. 2: eine Explosionsdarstellung der Bauform in Fig. 1, wobei nur die Hauptteile der Doppelkupplung gezeigt sind;
- Fig. 3: eine vertikalen Schnitt durch eine weitere Bauform der erfindungsgemäßen Doppelkupplung und
- Fig.4: eine Explosionsdarstellung der Bauform in Fig. 3, bei der nur die Hauptteile der Doppelkupplung gezeigt sind.

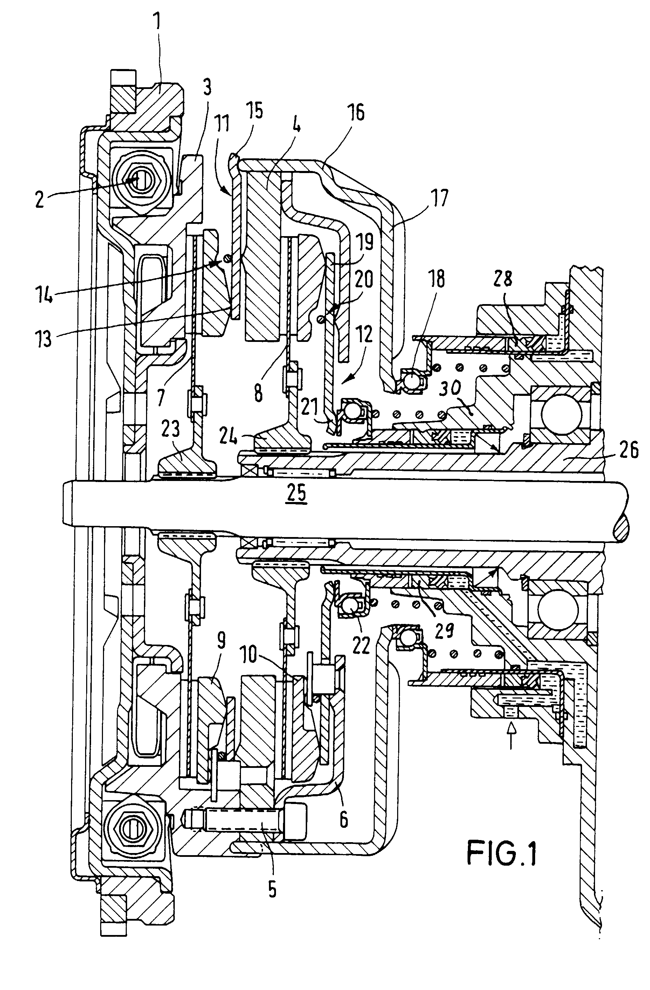

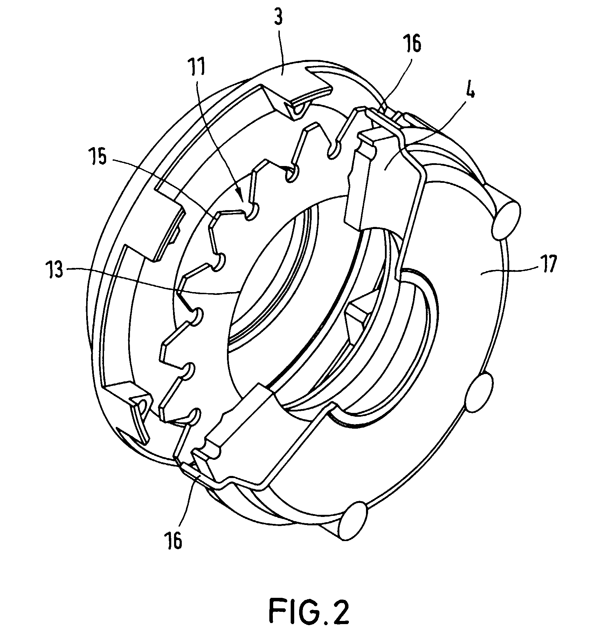

Bei der in den Fig. 1 und 2 gezeigten Bauform einer erfindungsgemäßen Doppelkupplung ist an einem Schwungrad 1, z.B. einer Brennkraftmaschine ggf. unter Zwischenschaltung einer Drehschwingungs-Dämpfungsanordnung 2 eine erste feste Druckplatte 3 angeordnet. Mit der ersten festen Druckplatte 3 ist eine zweite feste Druckplatte 4 axial und drehfest über Schraubenbolzen 5 und andere Verbindungselemente verbunden, die gleichzeitig einen Kupplungskorb 6 axial und drehfest mit dem Schwungrad 1 und den festen Druckplatten 3 und 4 verbinden. Axial bewegliche Kupplungsreibscheiben 7 und 8 sind benachbart den festen Druckplatten 3 und 4 und zwischen den beweglichen Anpreßplatten 9 und 10 angeordnet, die jeweils über eine Tellerfeder 11 bzw. 12 belastet sind.

Die erste Tellerfeder 11 liegt hierbei mit ihrem Innenumfang 13 gegen die erste Anpreßplatte 9, ist in ihrer ringförmigen Neutrallinie über eine Schneiden/Haltering-Lagerung 14 an der zweiten festen Druckplatte 4 kippbar abgestützt und bildet mit ihrem Außenumfang 15 mehrere Betätigungszungen, die über Stege 16 eines Korbteiles 17 betätigbar sind, die die zweite feste Druckplatte außen umfassen. Der Korbteil 17 kann über eine erste Ausrücklageranordnung 18 herkömmlicher Form beaufschlagt werden.

Die zweite Tellerfeder 12 ist in einer bei Reibscheibenkupplungen herkömmlichen Art ausgebildet und angeordnet, d. h. sie liegt mit ihrem Außenumfang 19 gegen die Anpreßplatte 10, ist in ihrer ringförmigen Neutrallinie über eine Schneiden/Haltering-Lagerung 20 kippbar abgestützt und bildet an ihrem Innenumfang Betätigungszungen 21, die über eine zweite Ausrücklageranordnung 22 beaufschlagbar sind.

Die beiden beweglichen Kupplungsreibscheiben 7 und 8 sind mit ihren entsprechenden Naben 23 und 24 einerseits auf einer Zentralwelle 25 und anderseits auf einer Hohlwelle 26 über Splinesverzahnungen axial etwas verschiebbar aber drehfest angeordnet.

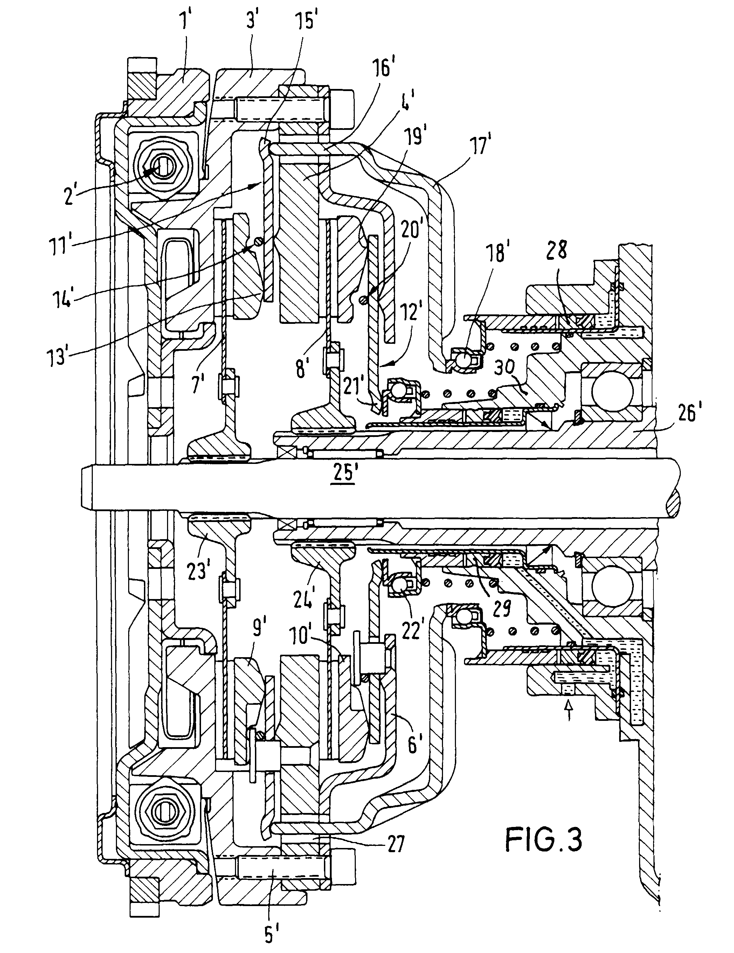

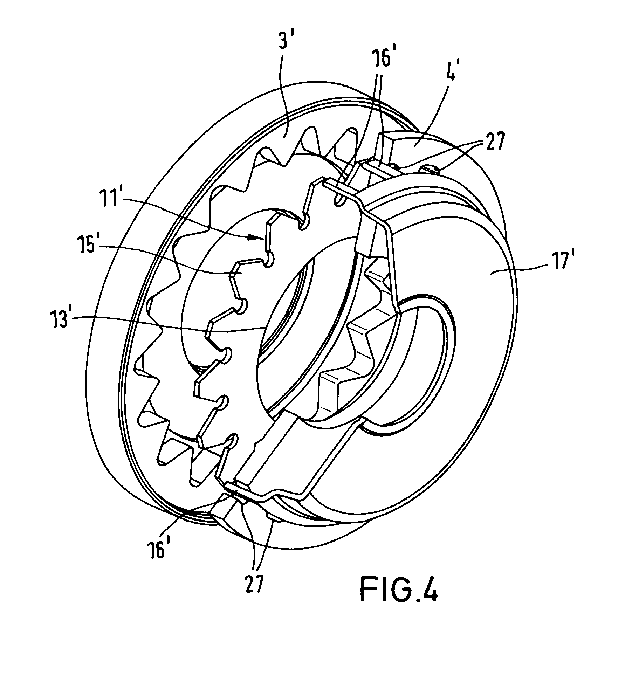

Bei der in den Fig. 3 und 4 gezeigten weiteren Bauform der erfindungsgemäßen Doppelkupplung sind die im wesentlichen mit der ersten Bauform übereinstimmenden Bauteile mit den gleichen, nur mit einem Strichindex versehenen Bezugszeichen versehen.

Dementsprechend braucht der Aufbau dieser Ausführungsform im einzelnen nicht nochmals erläutert zu werden, sondern es reicht aus, auf die durch zusätzliche Bezugszeichen kenntlich gemachten Unterschiede hinzuweisen.

Bei der in den Fig. 3 und 4 gezeigten Ausführungsform umgreift der die Betätigungszungen 15' der ersten Tellerfeder 11' über die Stege 16' betätigende Korbteil 17' nicht die zweite Druckplatte 4' sondern erstreckt sich mit seinen Stegen 16' durch eine Vielzahl von Öffnungen 27 in dieser zweiten Druckplatte. Damit kann der Durchmesser des für die Betätigung erforderlichen Korbteiles 17' kleiner gehalten werden als dies in der Ausführungsform nach den Fig. 1 und 2 möglich ist.

Die beiden erfindungsgemäßen Bauformen weisen den Vorteil auf, daß sie durch zwei konzentrisch zueinander angeordnete Ausrücklageranordnungen 18 und 22 bzw. 18' und 22' völlig unabhängig voneinander jedoch falls gewünscht auch gleichzeitig miteinander betätigt werden können. Die zum Verschieben der Ausrücklageranordnungen 18 und 22 bzw. 18' und 22' erforderlichen Ausrückeinrichtungen können hierbei vorzugsweise in Form von an sich bekannten hydraulisch betätigbaren Ringkolben 28 und 29 innerhalb eines einzigen am Getriebegehäuse befestigbaren Kupplungsausrückgehäuse 30 angeordnet sein.

Selbstverständlich kann die Betätigung der Ausrückeinrichtung auch über Schwingen oder Gabelhebel bewerkstelligt werden.

Die erfindungsgemäßen Doppelkupplungen in Reibscheibenbauart bieten insbesondere in Zusammenhang mit einer Getriebeauslegung, bei der unterschiedliche Übertragungszweige des Getriebes ohne Zugkraftunterbrechung geschaltet werden können den Vorteil, daß einerseits die erwünschten abwechselnden Drehmomentwege zur zugkraftunterbrechungsfreien Schaltung der einzelnen Gangstufen bereitgestellt werden und bei besonders schwierigen Anfahrvorgängen beide Kupplungsscheiben gemeinsam beaufschlagt werden können.

## Patentansprüche

1. Doppelkupplung in Reibscheibenbauart, insbesondere für Kraftfahrzeuge, mit einer, z.B. an einem Schwungrad (1) einer Brennkraftmaschine angeordneten ersten festen Druckplatte (3) zwischen der und einer ersten axial beweglich, durch eine Tellerfeder (11) beaufschlagten Anpreßplatte (9) eine erste, mit einer Zentraleingangswelle (25) eines Wechselgetriebes verbundene Kupplungsreibscheibe (7) angeordnet ist und eine zweite, feste Druckplatte (4) mit der ersten Druckplatte (3) axial und drehfest verbunden ist und zwischen der zweiten Druckplatte (4) und einer durch eine zweite Tellerfeder (12) belasteten zweiten Anpreßplatte (10) eine zweite, mit einer Eingangshohlwelle (26) des Wechselgetriebes verbundene Kupplungsreibscheibe (8) angeordnet ist und zwei unabhängig von einander bedienbare Ausrückeinrichtungen vorgesehen sind, wobei die auf die erste Anpreßplatte (9) einwirkende Tellerfeder (11) mit ihrer Neutrallinie in einer ringförmigen Schneiden/Haltering-Lagerung (14) kippbar an der zweiten Druckplatte (4) abgestützt ist und die auf die zweite Anpreßplatte (10) einwirkende zweite Tellerfeder (12) mit ihrem Außenumfang (19) an der zweiten Anpreßplatte (10) anliegt und mit ihrer Neutrallinie in einer ringförmigen Schneiden/Haltering-Lagerung (20) kippbar an einem mit den festen Druckplatten (3 und 4) verbundenen Kupplungskorbteil (6) abgestützt ist und an ihren an ihrem Innenumfang ausgebildeten Betätigungszungen (21) über eine zweite Ausrücklageranordnung (22) betätigbar ist,
**dadurch gekennzeichnet**, daß
- die auf die erste Anpreßplatte (9) einwirkende Tellerfeder (11) mit ihrem Innenumfang (13) an der Anpreßplatte (9) anliegt und an ihren an ihrem Außenumfang ausgebildeten Betätigungszungen (15) über Stege (16) eines Korbteiles (17) beaufschlagbar ist, der über eine erste Ausrücklageranordnung (18) axial verschiebbar ist.

2. Doppelkupplung in Reibscheibenbauart nach Anspruch 1,
**dadurch gekennzeichnet,** daß
- die beiden Ausrücklageranordnungen (18 und 22) konzentrisch zueinander angeordnet sind und z.B. über hydraulische Ringkolben (28 und 29) verschiebbar sind, die in einem gemeinsamen Kupplungsbetätigungsgehäuse (30) angeordnet sind, das an einer Wandung des Getriebegehäuses befestigt ist.

3. Doppelkupplung in Reibscheibenbauart nach Anspruch 1
**dadurch gekennzeichnet,** daß
- die beiden getrennten Ausrückeinrichtungen in Form von an sich bekannten Ausrückschwingen oder Gabelhebel ausgebildet sind.

## Claims

1. A double clutch of the friction disk type, in particular for motor vehicles, comprising a first fixed pressure plate (3) arranged for example on a flywheel (1) of an internal combustion engine, between which and a first axially movable pressure-application plate (9) acted upon by a disk spring (11) there is arranged a first clutch friction disk (7) connected with the central input shaft (25) of a change-speed gear box, and a second fixed pressure plate (4) connected axially and for rotation with the first compression plate, between which second compression plate (4) and a second pressure-application plate (10) loaded by a second disk spring (12) there is arranged a second clutch friction disk (8) connected with a hollow input shaft (26) of the change-speed gear box, two clutch release devices operable independently of one another being provided, the disk spring (11) acting on the first pressure-application plate (9) being supported tiltably on the second pressure plate (4) with its neutral line in an annular knife-edge/retaining ring bearing system (14) and the second disk spring (12) acting on the second pressure-application plate (10) resting with its outer circumference (19) on the second pressure-application plate (10) and being supported tiltably on a clutch cage part (6) connected with the fixed pressure plates (3 and 4) with its neutral line in an annular knife-edge/retaining ring bearing system (20) and being actuatable by means of its actuating tongues (21) constructed on its inner circumference via a second clutch release bearing arrangement (22).
characterised in that
- the disk spring (11) acting on the first pressure-application plate (9) rests with its inner circumference (13) against the pressure-application plate (9) and may be acted upon by means of its actuating tongues (15) constructed on its outer circumference via webs (16) of a cage part (17), which may be displaced axially via a first clutch release bearing arrangement (18).

2. A double clutch of the friction disk type according to claim 1,
characterised in that
- the two clutch release bearing arrangements (18 and 22) are arranged concentrically relative to one another and may be displaced for example by means of hydraulic annular pistons (28 and 29), which are arranged in a common clutch actuating housing (30), which is attached to a wall of the gear casing.

3. A double clutch of the friction disk type according to claim 1,
characterised in that
- the two separate clutch release devices take the form of oscillating clutch release cranks or forked levers known per se.

## Revendications

1. Embrayage double en exécution à disques de friction, notamment pour véhicules automobiles, avec un premier plateau de pression (3) fixe, disposé par exemple sur un volant d'inertie (1) d'un moteur à combustion interne, un premier disque d'embrayage (7), assemblé à un arbre primaire central (25) d'une boîte de vitesses, étant disposé entre le premier plateau de pression (3) et un premier plateau presseur (9) axialement mobile, sollicité par une rondelle-ressort (11), et avec un deuxième plateau de pression (4) fixe, relié en fixité axiale et de rotation au premier plateau de pression (3), un deuxième disque d'embrayage (8), assemblé à un arbre primaire creux (26) de la boîte de vitesses, étant disposé entre le deuxième plateau de pression (4) et un deuxième plateau presseur (10) sollicité par une deuxième rondelle-ressort (12), et deux dispositifs de débrayage manoeuvrables indépendamment l'un de l'autre étant prévus, la rondelle-ressort (11) agissant sur le premier plateau presseur (9) étant appuyée contre le deuxième plateau de pression (4) en pouvant basculer par son axe neutre dans un palier annulaire (14) à couteau de répartition et bague de maintien, et la deuxième rondelle-ressort (12) agissant sur le deuxième plateau presseur (10) s'appliquant par sa périphérie extérieure (19) contre le deuxième plateau presseur (10) et étant appuyée, contre un élément de panier d'embrayage (6) relié aux plateaux de pression fixes (3 et 4), en pouvant basculer par son axe neutre dans un palier annulaire (20) à couteau de répartition et bague de maintien, et pouvant être actionnée, sur les languettes d'actionnement (21) formées sur sa périphérie intérieure, au moyen d'un deuxième ensemble de palier de débrayage (22),
**caractérisé** en ce que la rondelle-ressort (11) agissant sur le premier plateau presseur (9) s'applique par sa périphérie intérieure (13) contre le plateau presseur (9) et peut être sollicitée, sur les languettes d'actionnement (15) formées sur sa périphérie extérieure, au moyen de branches (16) d'un élément de panier (17) qui peut être déplacé axialement au moyen d'un premier ensemble de palier de débrayage (18).

2. Embrayage double en exécution à disques de friction selon la revendication 1, **caractérisé** en ce que les deux ensembles (18 et 22) de palier de débrayage sont disposés concentriquement l'un par rapport à l'autre, et peuvent être déplacés par exemple au moyen de pistons hydrauliques annulaires (28 et 29), qui sont disposés dans un carter commun (30) de commande d'embrayage qui est fixé sur une paroi du carter de boîte de vitesses.

3. Embrayage double en exécution à disques de friction selon la revendication 1, **caractérisé** en ce que les deux dispositifs de débrayage séparés sont réalisés sous la forme de leviers à fourche ou de leviers oscillants de débrayage en soi connus.
